# EUROPÄISCHE PATENTSCHRIFT

(11) **EP 1 243 990 B1**
(45) Veröffentlichungstag und Bekanntmachung des Hinweises auf die Patenterteilung: **23.10.2013**
(21) Anmeldenummer: 02004919.3
(22) Anmeldetag: 05.03.2002
(51) Int. Cl.: G05B 19/042, G05B 19/05

(54) **Leit/Steuersystem mit einer speicherprogrammierbaren Steuerung und einer Vielzahl von Aktoren und/oder Sensoren und/oder Eingabeeinheiten und/oder Ausgabeeinheiten und/oder Ein/Ausgabeeinheiten**
Guidance/Control-system with a programmable logic control and a plurality of actuators and/or sensors and/or input-units and/or output-units and/or input/output-units
Système de commande/guidage avec une commande programmable et une pluralite d'actuateurs et/ou capteurs et/ou des unités entrée et/ou des unités sortie et/ou des unités entrée/sortie

(30) Priorität: 21.03.2001 DE 10113677; 22.02.2002 DE 10207502
(43) Veröffentlichungstag der Anmeldung: 25.09.2002
(73) Patentinhaber: ABB Research Ltd., 8050 Zürich (CH)
(72) Erfinder: Garrels, Kai, Dipl.-Ing., 68239 Mannheim (DE); Apneseth, Christoffer, B.Eng. (Hons.), 0559 Oslo (NO); Vallestad, Anne E., Civil Ing., 1341 Slependen (NO); Vefling, Harald, Silv. Ing., 3140 Borgheim (NO); Aakvaag, Niels, 1362 Hosle (NO)
(74) Vertreter: Miller, Toivo

(56) Entgegenhaltungen:
- DE-A1- 3 720 164
- DE-A1- 4 232 518
- DE-A1- 19 510 470
- DE-U1- 29 620 142
- US-A- 5 793 963
- US-A- 5 963 147
- RENATO BONADIO ET AL: "For remote stations,fieldbus + PLC + radio = economical network" INTERNET CITATION, [Online] Februar 1999 (1999-02), XP002199199 Gefunden im Internet: URL:http://www.isa.org/journals/intech/fea ture/1,1162,127,00.html> [gefunden am 2002-05-16]
- KAWAMURA A ET AL: "Wireless transmission of power and information through one high frequency resonant AC link inverter for robot manipulator applications" INDUSTRY APPLICATIONS CONFERENCE, 1995. THIRTIETH IAS ANNUAL MEETING, IAS '95., CONFERENCE RECORD OF THE 1995 IEEE ORLANDO, FL, USA 8-12 OCT. 1995, NEW YORK, NY, USA,IEEE, US, Bd. 3, 8. Oktober 1995 (1995-10-08), Seiten 2367-2372, XP010193249 ISBN: 0-7803-3008-0

## Beschreibung

Die Erfindung bezieht sich auf ein Leit/Steuersystem mit einer speicherprogrammierbaren Steuerung und einer Vielzahl von Aktoren und/oder Sensoren und/oder Eingabeeinheiten und/oder Ausgabeeinheiten und/oder Ein/Ausgabeeinheiten- nachstehend Einheiten genannt -. Die Erfindung kann beispielsweise bei einem System mit einer Vielzahl von Näherungsschaltern/Näherungsssensoren, Temperaturmeßsensoren, Druckmeßsensoren, Strommeßsensoren oder Spannungsmeßsensoren sowie mikromechanischen, piezoelektrischen, elektrochemischen, magnetostriktiven, elektrostriktiven, elektrostatischen oder elektromagnetischen Aktoren verwendet werden, wie sie in Aktoren-Systemen oder Maschinen, beispielsweise bei Steuer/Regelsystemen, in Fernsteuersystemen, in der Robotertechnik, bei Herstellungsautomaten bzw. Fertigungsautomaten, als Anzeigeelemente und in Schutz- und Sicherheitssystemen (beispielsweise bei Freiluft- oder Innenraum-Schaltanlagen) zum Einsatz gelangen.

Aus der DE 19925547 A1 ist ein Leit/Steuersystem mit einem Zentralrechner, einem Bus und einer Vielzahl von Eingabeeinheiten und/oder Ausgabeeinheiten und/oder Ein/Ausgabe-Einheiten und/oder Sensoren und/oder Aktoren - nachstehend Einheiten genannt - bekannt. Es sind Bus-Stecker vorgesehen, welche einerseits über eine erste Steckvorrichtung mit einer Einheit und andererseits über ein Verbindungskabel mit dem Bus verbunden sind und welche einen zur Signalanpassung der zwischen der Einheit und dem Bus auszutauschenden Signale und/oder zur Aktivierung/Deaktivierung der Einheit und/oder zur Einstellung von spezifischen Parametern der Einheit dienenden Mikrorechner aufweisen.

Der Erfindung liegt die Aufgabe zugrunde, ein universell einsetzbares und kostengünstig herstellbares Leit/Steuersystem mit einer speicherprogrammierbaren Steuerung und einer Vielzahl von Aktoren und/oder Sensoren und/oder Eingabeeinheiten und/oder Ausgabeeinheiten und/oder Ein/Ausgabeeinheiten anzugeben.

Diese Aufgabe wird erfindungsgemäß gelöst durch die Merkmale des unabhängigen Anspruchs 1.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig. 1: eine erste Ausführungsform eines Leit/Steuersystems mit einer Vielzahl von Aktoren und einer speicherprogrammierbaren Steuerung,
- Fig. 2: eine zweite Ausführungsform eines Leit/Steuersystems mit einer Vielzahl von Aktoren und einer speicherprogrammierbaren Steuerung,
- Fig. 3: eine dritte Ausführungsform eines Leit/Steuersystems mit einer Vielzahl von Aktoren und einer speicherprogrammierbaren Steuerung.

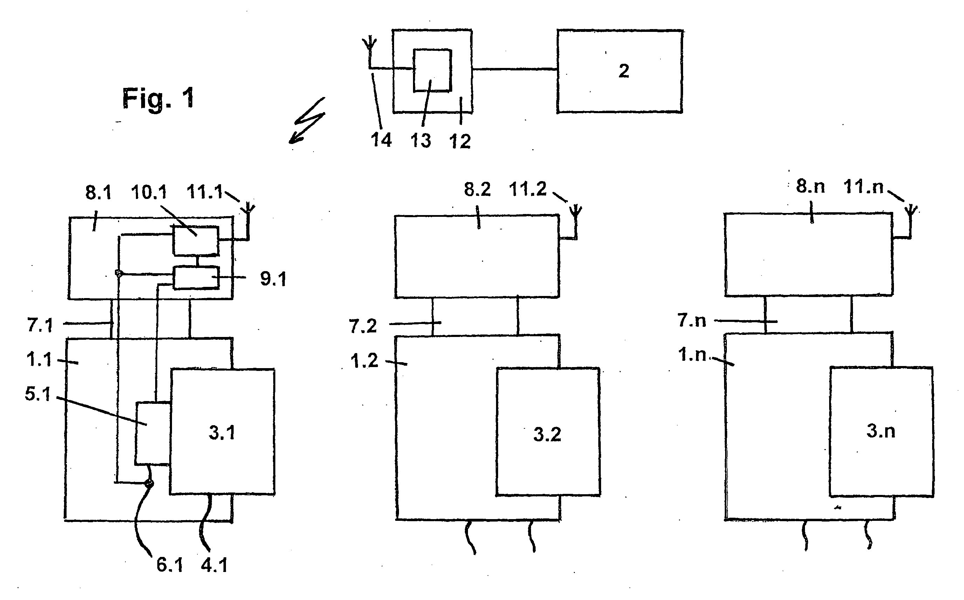

In Fig. 1 ist eine erste Ausführungsform eines Leit/Steuersystems mit einer Vielzahl von Einheiten, hier Aktoren 1.1, 1.2...1.n und einer speicherprogrammierbaren Steuerung 2 dargestellt. Jeder Aktor 1.1, 1.2...1.n weist eine Aktoreinheit 3.1, 3.2...3.n auf, beispielsweise ein Druckluftventil, welches an eine Druckluftversorgung 4.1 angeschlossen ist. Die Ansteuerung der Aktoreinheit 3.1 erfolgt mit Hilfe einer Ansteuereinrichtung 5.1, welche die zur Ansteuerung erforderliche Energie aus einer elektrischen Energieversorgung 6.1 bezieht.

Wie bereits in der DE 19925547 vorgesehen, weist jede Einheit, hier Aktor 1.1, 1.2...1.n eine Steckvorrichtung 7.1, 7.2...7.n auf. Im Unterschied zur Ausführungsform gemäß DE 19925547 wird jedoch auf diese Steckvorrichtung kein "intelligenter" Bus-Stecker aufgesteckt, sondern eine steckbare "intelligente" Kommunikationseinrichtung 8.1, 8.2...8.n.

Die gewünschte "Intelligenz" jeder steckbaren Kommunikationseinrichtung 8.1, 8.2...8.n wird durch einen eingebauten Mikrorechner- siehe 9.1 - sichergestellt. Dieser Mikrorechner dient zur Signalanpassung der zwischen den Einheiten 1.1, 1.2,...1.n und der speicherprogrammierbaren Steuerung 2 auszutauschenden Signale. Diese Signale sind beispielsweise Ansteuersignale zur Aktivierung/Deaktivierung der Einheiten, hier Aktoren 1.1, 1.2,...1.n und zur Einstellung von spezifischen Parametern der Einheiten 1.1, 1.2,...1.n.

Jede Kommunikationseinrichtung 8.1...8.n weist zumindest einen Funkempfängersiehe 10.1 - mit nachgeordneter Antenne 11.1 ...11. n auf, wobei jedoch vorzugsweise zusätzlich ein Funksender oder alternativ hierzu ein kombinierter Funksender/Funkempfänger vorgesehen sind, um eine bidirektionale Signalübertragung zwischen den Einheiten und der speicherprogrammierbaren Steuerung zu ermöglichen. Auf diese Weise kann beispielsweise der aktuelle Zustand eines Aktors (oder ein Sensorsignal) gemeldet werden.

Die Energieversorgung von Mikrorechner 9.1 und Funkempfänger 10.1 der Kommunikationseinrichtung 8.1 erfolgt über die Steckvorrichtung 7.1, an welcher die zur Speisung der Ansteuereinrichtung 5.1 vorgesehene elektrische Energieversorgung 6.1 anliegt, beispielsweise die Spannungsversorgung, die ein Schütz (Aktoreinheit) zum Schalten benötigt oder die ein Druckluftventil betätigt. Alternativ kann auch die elektrische Ansteuerenergie für die Einheit direkt zur Energieversorgung von Mikrorechner 9.1 und Funkempfänger 10.1 der Kommunikationseinrichtung 8.1 herangezogen werden, falls möglich.

Für die Funk-Kommunikation ist die speicherprogrammierbare Steuerung 2 mit einer Basisstation 12 verbunden, welche zumindestens einen Funksender 13 mit Antenne 14, vorzugsweise jedoch zusätzlich einen Funkempfänger oder alternativ hierzu einen kombinierten Funksender/Funkempfänger aufweist.

Für das angegebene Leit/Steuersystem ist es von Wichtigkeit und von großem Vorteil, daß mit ein und denselben Einheiten drei völlig unterschiedliche Kommunikationsverbindungen mit der speicherprogrammierbaren Steuerung realisierbar sind:
- Konventionelle Steuerverdrahtung zwischen den Steckvorrichtungen der Einheiten und der speicherprogrammierbaren Steuerung;
- Verdrahtung mit der speicherprogrammierbaren Steuerung über einen (zweiadrigen) Feldbus durch Aufstecken der gemäß DE 1992554 A1 vorgeschlagenen "intelligenten" Bus-Stecker auf die Steckvorrichtungen der Einheiten;
- Drahtlose Kommunikation mit der speicherprogrammierbaren Steuerung durch Aufstecken der "intelligenten" Kommunikationseinrichtungen 8.1...8.n auf die Steckvorrichtungen der Einheiten.

Jede Kommunikationseinrichtung 8.1...8.n kann optional mit einem optischen Empfänger (beispielsweise Infrarot-Empfänger) ausgerüstet sein, welcher über einen entsprechenden optischen Sender (beispielsweise Infrarot-Sender) ansteuerbar ist, wodurch beispielsweise vorteilhaft eine Parameter-Vorgabe erfolgen kann. Mittels einer in jeder Kommunikationseinrichtung 8.1...8.n befindlichen Leuchtdiode kann der aktuelle Zustand einer Einheit 1.1, 1.2,...1.n, beispielsweise der EIN/AUS-Zustand eines Aktors angezeigt werden. Diese Variante mit visueller Anzeige des aktuellen Zustandes und direkter Einstellmöglichkeit der Parameter hat beispielsweise bei der Inbetriebnahme des Leit/Steuersystems einer Anlage mit einer Vielzahl von Einheiten große Vorteile. Es kann Zeit eingespart werden. Der Kostenaufwand wird reduziert.

Von Vorteil ist es auch, daß die Funk-Kommunikation zwischen speicherprogrammierbarer Steuerung 2 bzw. der Basisstation 12 und den einzelnen Mikrorechnern 9.1... der Aktoren 1.1, 1.2,...1.n in der Weise möglich ist, daß beispielsweise ein "Downloaden" von Programmen von der speicherprogrammierbaren Steuerung 2 zu den einzelnen Mikrorechnern erfolgen kann.

Auch wenn beim vorstehenden Ausführungsbeispiel ein System mit einer Vielzahl von Aktoren beschrieben wird, ist die Erfindung nicht hierauf beschränkt, sondern in gleicher Weise für ein System mit einer Vielzahl von Sensoren (mit einem die Sensorumgebung detektierenden Sensorkopf mit nachgeschalteter Signalauswertung) und/oder Eingabeeinheiten und/oder Ausgabeeinheiten und/oder Ein/Ausgabeeinheiten- nachstehend Einheiten genannt - einsetzbar, wie vorstehend auch schon mehrfach angedeutet.

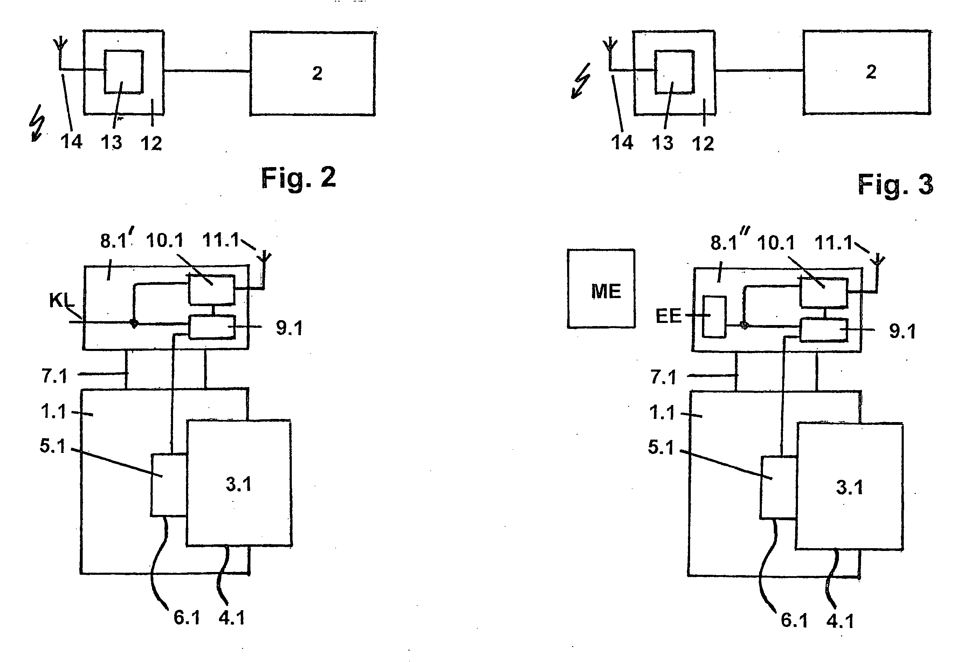

In Fig. 2 ist eine zweite Ausführungsform eines Leit/Steuersystems mit einer Vielzahl von Einheiten, hier Aktoren und einer speicherprogrammierbaren Steuerung dargestellt. Die drahtlose Kommunikationseinrichtung 8.1' ist mit zur Energieeinspeisung dienenden Klemmen KL ausgerüstet. In Abwandlung zur Ausführungsform gemäß Fig. 1 erfolgt demnach die elektrische Energieversorgung der Baueinheiten der drahtlosen Kommunikationseinrichtung 8.1' nicht, indem die elektrische Energie für die Einheit oder die elektrische Steuerenergie für eine Ansteuereinrichtung der Einheit herangezogen wird, sondern indem eine externe Energieversorgung (beispielsweise 24 Volt Gleichspannung) an die Klemmen KL angeschlossen wird. Selbstverständlich ist nicht lediglich eine einzige Einheit, sondern eine Vielzahl von Einheiten vorgesehen.

In Fig. 3 ist eine dritte Ausführungsform eines Leit/Steuersystems mit einer Vielzahl von Einheiten, hier Aktoren und einer speicherprogrammierbaren Steuerung dargestellt. Die drahtlose Kommunikationseinrichtung 8.1" ist mit einer Energieeinspeiseeinrichtung EE ausgerüstet. Des weiteren ist eine externe Magnetfelderzeugungseinrichtung ME vorgesehen. Diese Magnetfelderzeugungseinrichtung ME erzeugt mittels mindestens einer von einem Oszillator gespeisten (und vorzugsweise zusammen mit einem Resonanzkondensator im Resonanzfall betriebenen) Primärwicklung ein Magnetfeld im Bereich von etwa 15 kHz bis etwa 15 MHz, welches von mindestens einer Sekundärwicklung der Energieeinspeiseeinrichtung EE empfangen wird. Die Sekundärwicklung wird vorzugsweise zusammen mit einem Resonanzkondensator im Resonanzfall betrieben.

Ein mit der Sekundärwicklung verbundener Gleichrichter mit Stützkondensator dient zum Gleichrichten bzw. Umwandeln der induktiv empfangenen Energie und versorgt die Baueinheiten. In Abwandlung zur Ausführungsform gemäß Fig. 1 erfolgt demnach die elektrische Energieversorgung der Baueinheiten der drahtlosen Kommunikationseinrichtung 8.1" nicht, indem die elektrische Energie für die Einheit oder die elektrische Steuerenergie für eine Ansteuereinrichtung der Einheit herangezogen wird, sondern indem die beispielsweise aus der DE 199 26 799 A1 oder DE 199 26 562 A1 bekannte Technologie der induktiven Energieübertragung eingesetzt wird. Selbstverständlich ist nicht lediglich eine einzige Einheit, sondern eine Vielzahl von Einheiten vorgesehen.

## Patentansprüche

1. Leit/Steuersystem mit einer speicherprogrammierbaren Steuerung (2) und einer Vielzahl von Aktoren und/oder Sensoren und/oder Eingabeeinheiten und/oder Ausgabeeinheiten und/oder Ein/Ausgabeeinheiten (1.1...1.n) - nachstehend Einheiten genannt -,
- welche jeweils eine Steckvorrichtung (7.1...7.n) aufweisen, auf welche jeweils eine drahtlose Kommunikationseinrichtung (8.1...8.n) aufgesteckt ist,
- welche mit einem Funkempfänger (10.1) ausgestattet ist
- und welche einen zur Signalanpassung der zwischen der Einheit (1.1...1.n) und der speicherprogrammierbaren Steuerung (2) auszutauschenden Signale und/oder zur Aktivierung/Deaktivierung der Einheit und/oder zur Einstellung von spezifischen Parametern der Einheit dienenden Mikrorechner (9.1) aufweist,
- wobei die speicherprogrammierbare Steuerung (2) mit mindestens einer Basisstation (12) verbunden ist, welche mindestens einen Funksender (13) zur Erzeugung der Funksignale für die Einheiten (1.1...1.n) aufweist,
- so dass mit ein und denselben Einheiten (1.1...1.n) drei völlig unterschiedliche Kommunikationsverbindungen mit der speicherprogrammierbaren Steuerung (2) realisierbar sind:
A) Konventionelle Steuerverdrahtung zwischen den Steckvorrichtungen (7.1...7.n) der Einheiten (1.1...1.n) und der speicherprogrammierbaren Steuerung (2);
B) Verdrahtung mit der speicherprogrammierbaren Steuerung (2) über einen Feldbus durch Aufstecken von Bus-Steckern auf die Steckvorrichtungen (7.1...7.n) der Einheiten (1.1...1.n);
C) Drahtlose Kommunikation mit der speicherprogrammierbaren Steuerung (2) durch Aufstecken der drahtlosen Kommunikationseinrichtungen (8.1...8.n) auf die Steckvorrichtungen (7.1...7.n) der Einheiten (1.1...1.n).

2. Leit/Steuersystem nach Anspruch 1, **dadurch gekennzeichnet, dass** die drahtlose Kommunikationseinrichtung (8.1...8.n) zusätzlich einen Funksender oder einen kombinierten Funksender/Funkempfänger aufweist.

3. Leit/Steuersystem nach Anspruch 1 und/oder 2, **dadurch gekennzeichnet, dass** die Basisstation (12) zusätzlich einen Funkempfänger oder einen kombinierten Funksender/Funkempfänger aufweist.

4. Leit/Steuersystem nach einem der vorstehenden Ansprüche, **dadurch gekennzeichnet, dass** die drahtlose Kommunikationseinrichtung (8.1...8.n) zusätzlich einen optischen Empfänger aufweist.

5. Leit/Steuersystem nach einem der vorstehenden Ansprüche, **dadurch gekennzeichnet, dass** die drahtlose Kommunikationseinrichtung (8.1...8.n) zusätzlich eine Leuchtdiode zur Anzeige des aktuellen Zustandes der Einheit aufweist.

6. Leit/Steuersystem nach einem der Ansprüche 1 - 5, **dadurch gekennzeichnet, dass** über die Steckvorrichtung (7.1...7.n) eine elektrische Energieversorgung der Baueinheiten der drahtlosen Kommunikationseinrichtung (8.1...8.n) erfolgt, indem die elektrische Energie für die Einheit oder die elektrische Steuerenergie (6.1) für eine Ansteuereinrichtung (5.1) der Einheit herangezogen wird.

7. Leit/Steuersystem nach einem der Ansprüche 1 bis 5, **dadurch gekennzeichnet, dass** die drahtlose Kommunikationseinrichtungen jeweils mit zur Energieeinspeisung dienenden Klemmen (KL) ausgerüstet sind und dass die elektrische Energieversorgung der Baueinheiten der drahtlosen Kommunikationseinrichtungen durch eine an diese Klemmen angeschlossene externe Energieversorgung erfolgt.

8. Leit/Steuersystem nach einem der Ansprüche 1 bis 5, **dadurch gekennzeichnet, dass** die drahtlose Kommunikationseinrichtungen jeweils mit einer Energieeinspeiseeinrichtung (EE) ausgerüstet sind, welche ein von einer externen Magnetfelderzeugungseinrichtung (ME) unter Einsatz mindestens einer Primärwicklung erzeugtes Magnetfeld mit Hilfe mindestens einer Sekundärwicklung empfangen und dass die elektrische Energieversorgung der Baueinheiten der drahtlosen Kommunikationseinrichtungen durch Gleichrichten bzw. Umwandeln der induktiv empfangenen Energie erfolgt.

## Claims

1. Management/control system having a programmable logic controller (2) and a multiplicity of actuators and/or sensors and/or input units and/or output units and/or input/output units (1.1 ... 1.n) - referred to as units below -,
- which each have a plug-in device (7.1 ... 7.n), onto which a wireless communication means (8.1 ... 8.n) is plugged in each case,
- which is provided with a radio receiver (10.1),
- and which has a microcomputer (9.1) which is used for signal matching of the signals to be interchanged between the unit (1.1 ... 1.n) and the programmable logic controller (2) and/or for activation/deactivation of the unit and/or for setting specific parameters for the unit,
- wherein the programmable logic controller (2) is connected to at least one base station (12) which has at least one radio transmitter (13) for producing the radio signals for the units (1.1 ... 1.n),
- with the result that three completely different communication connections to the programmable logic controller (2) can be implemented using one and the same unit (1.1 ... 1.n):
A) conventional control wiring between the plug-in devices (7.1 ... 7.n) of the units (1.1 ... 1.n) and the programmable logic controller (2);
B) wiring to the programmable logic controller (2) via a field bus by plugging bus connectors onto the plug-in devices (7.1 ... 7.n) of the units (1.1 ... 1.n);
C) wireless communication with the programmable logic controller (2) by plugging the wireless communication means (8.1 ... 8.n) onto the plug-in devices (7.1 ... 7.n) of the units (1.1 ... 1.n).

2. Management/control system according to Claim 1, **characterized in that** the wireless communication means (8.1 ... 8.n) additionally has a radio transmitter or a combined radio transmitter/radio receiver.

3. Management/control system according to Claim 1 and/or 2, **characterized in that** the base station (12) additionally has a radio receiver or a combined radio transmitter/radio receiver.

4. Management/control system according to one of the preceding claims, **characterized in that** the wireless communication means (8.1 ... 8.n) additionally has an optical receiver.

5. Management/control system according to one of the preceding claims, **characterized in that** the wireless communication means (8.1 ... 8.n) additonally has a light-emitting diode to indicate the present state of the unit.

6. Management/control system according to one of Claims 1 to 5, **characterized in that** the components of the wireless communication means (8.1 ... 8.n) are supplied with electric power via the plug-in device (7.1 ... 7.n) by using the electric power for the unit or the electric control power (6.1) for an actuation means (5.1) of the unit.

7. Management/control system according to one of Claims 1 to 5, **characterized in that** the wireless communication means are each equipped with terminals (KL) which are used for feeding in power and **in that** the components of the wireless communication means are supplied with electric power by an external power supply connected to said terminals.

8. Management/control system according to one of Claims 1 to 5, **characterized in that** the wireless communication means are each equipped with a means (EE) for feeding in power, which, by means of at least one secondary winding, receives a magnetic field produced by an external means (ME) for producing a magnetic field using at least one primary winding and **in that** the components of the wireless communication means are supplied with electric power by rectifying or converting the inductively received power.

## Revendications

1. Système de conduite/contrôle comprenant un automate programmable industriel (2) et une pluralité d'actionneurs et/ou de capteurs et/ou d'unités d'entrée et/ou d'unités de sortie et/ou d'unités d'entrée/sortie (1.1, ..., 1.n), appelés ci-après des unités,
- qui présentent respectivement un dispositif d'enfichage (7.1, ..., 7.n) sur lequel est à chaque fois enfiché un dispositif de communication sans fil (8.1, ..., 8.n),
- qui est équipé d'un récepteur radioélectrique (10.1),
- et qui présente un microcalculateur (9.1) pour l'adaptation de signal des signaux à échanger entre l'unité (1.1, ..., 1.n) et l'automate programmable industriel (2) et/ou pour l'activation/désactivation de l'unité et/ou pour le réglage de paramètres spécifiques de l'unité,
- l'automate programmable industriel (2) étant relié avec au moins une station de base (12) qui présente au moins un émetteur radioélectrique (13) pour générer les signaux radioélectriques pour les unités (1.1, ..., 1.n),
- de sorte que trois liaisons de communication totalement différentes avec l'automate programmable industriel (2) puissent être réalisées avec une seule et même unité (1.1, ..., 1.n) :
A) câblage de contrôle conventionnel entre les dispositifs d'enfichage (7.1, ..., 7.n) des unités (1.1, ..., 1.n) et l'automate programmable industriel (2) ;
B) câblage avec l'automate programmable industriel (2) par le biais d'un bus de terrain en enfichant des fiches de bus sur les dispositifs d'enfichage (7.1, ..., 7.n) des unités (1.1, ..., 1.n) ;
C) communication sans fil avec l'automate programmable industriel (2) en enfichant les dispositifs de communication sans fil (8.1, ..., 8.n) sur les dispositifs d'enfichage (7.1, ..., 7.n) des unités (1.1, ..., 1.n).

2. Système de conduite/contrôle selon la revendication 1, **caractérisé en ce que** le dispositif de communication sans fil (8.1, ..., 8.n) présente en plus un émetteur radioélectrique ou un émetteur radioélectrique / récepteur radioélectrique combiné.

3. Système de conduite/contrôle selon la revendication 1 et/ou 2, **caractérisé en ce que** la station de base (12) présente en plus un récepteur radioélectrique ou un émetteur radioélectrique / récepteur radioélectrique combiné.

4. Système de conduite/contrôle selon l'une des revendications précédentes, **caractérisé en ce que** le dispositif de communication sans fil (8.1, ..., 8.n) présente en plus un récepteur optique.

5. Système de conduite/contrôle selon l'une des revendications précédentes, **caractérisé en ce que** le dispositif de communication sans fil (8.1, ..., 8.n) présente en plus une diode électroluminescente pour indiquer l'état actuel de l'unité.

6. Système de conduite/contrôle selon l'une des revendications 1 à 5, **caractérisé en ce qu'**une alimentation en énergie électrique des composants du dispositif de communication sans fil (8.1, ..., 8.n) est réalisée par le biais du dispositif d'enfichage (7.1, ..., 7.n) en utilisant l'énergie électrique pour l'unité ou l'énergie électrique de contrôle (6.1) pour un dispositif de commande (5.1) de l'unité.

7. Système de conduite/contrôle selon l'une des revendications 1 à 5, **caractérisé en ce que** les dispositifs de communication sans fil sont respectivement équipés de bornes (KL) servant à l'injection d'énergie et que l'alimentation en énergie électrique des composants des dispositifs de communication sans fil s'effectue par une source d'énergie externe raccordée à ces bornes.

8. Système de conduite/contrôle selon l'une des revendications 1 à 5, **caractérisé en ce que** les dispositifs de communication sans fil sont respectivement équipés d'un dispositif d'injection d'énergie (EE) qui reçoit, à l'aide d'au moins un enroulement secondaire, un champ magnétique généré par un dispositif externe générateur de champ magnétique (ME) en utilisant au moins un enroulement primaire, et **en ce que** l'alimentation en énergie électrique des composants des dispositifs de communication sans fil est réalisée en redressant ou en convertissant l'énergie reçue de manière inductive.
